# EUROPEAN PATENT SPECIFICATION

(11) **EP 1 965 547 B1**
(45) Date of publication and mention of the grant of the patent: **07.10.2015**
(21) Application number: 07004097.7
(22) Date of filing: 28.02.2007
(51) Int. Cl.: H04L 12/58, G06Q 10/06, G06Q 10/10

(54) **A computer implemented system and a method for detecting abuse of an electronic mail infrastructure in a computer network**
Computerimplementiertes System und Verfahren zur Detektion von Missbrauch einer E-Mail-Infrastruktur in einem Computernetzwerk
Système informatisé et procédé pour détecter l'abus d'une infrastructure de courrier électronique dans un réseau informatisé

(43) Date of publication of application: 03.09.2008
(73) Proprietor: STRATO AG, 10587 Berlin (DE)
(72) Inventor: Bickel, Steffen Dipl.-Wirtschaftsinform., 66123 Saarbrücken (DE); Haider, Peter Dipl.-Inform., 66111 Saarbrücken (DE); Scheffer, Tobias Prof. Dr., 10247 Berlin (DE); Wienholtz, Rene, 10367 Berlin (DE)
(74) Representative: Bittner, Thomas L.

(56) References cited:
- WO-A-2005/081109
- WO-A-2006/088915
- US-A1- 2005 198 175

## Description

The present invention relates to techniques for detecting abuse of an electronic mail infrastructure in a computer network.

### Background of the invention

Commercial services which provide internet bandwidth and computational resources frequently get abused by attackers for sending mass amounts of unsolicited bulk electronic mail. For example, an online store which is hosted either on servers of the carrier or on servers provided by a third party exposes scripts to the internet. These scripts are accessible over HTTP connections which are capable of automatically sending electronic mails, often to predefined recipients - for instance, to a customer of the store to contact the carrier. As many of those scripts, are prone to contain security holes and in fact frequently are vulnerable, attackers can abuse them to send mass electronic mails to recipients of their choice, with arbitrary content and in amounts which result in serious consequences for the carrier of the site with the vulnerable script and/or the provider of the electronic mail infrastructure. First, computational resources and bandwidth are consumed which causes costs. Second, the overload of electronic mail transmissions may interrupt the regular operation of the web site and result in, e.g. a loss of revenue for the carrier. Third, recipients of the unsolicited electronic mails are likely to report the sending servers to their electronic mail service providers and/or independent spam control instances. This frequently results in the sending servers respectively their IP-addresses getting blocked by other electronic mail service providers, with the result that legitimate electronic mails sent from the attacked host stop to reach their recipients.

Previous approaches to prevent such mass outbound sending of spam electronic mails mostly comprise of a separate gateway for outgoing electronic mails, which filters all outbound electronic mail traffic and blocks electronic mails which are deemed to be abusive. There are several drawbacks in this approach. First, legal issues arise when outgoing electronic mails are blocked or deleted, especially when the electronic mail originates from a user account belonging to a third party. Second, there is no way to provide feedback to the originating vulnerable script, since at the point of filtering, all information about the originating script is lost. This also relates to the third drawback, which is the lack of additional information for classifying outgoing electronic mails, such as name and parameters of the initiating script.

In the document US 7,054,907 B1 systems and methods for blocking delivery of an electronic communication are disclosed. In an embodiment, a method includes receiving at least a portion of a first electronic communication that includes a first electronic communication source address and a first electronic communication recipient address. User electronic communication blocking profile data is accessed, in which the user electronic communication blocking profile data includes a plurality of user electronic communication blocking records. Each user electronic communication blocking record of at least a subset of the plurality of user electronic communication blocking records includes a recipient identifier field to store a recipient identifier and a sender identifier field to store a sender identifier. A first user electronic communication blocking record is selected based at least in part on the first electronic communication source address and the first electronic communication recipient address. Delivery of the first electronic communication to the first electronic communication recipient address is blocked based at least in part on the selected first user electronic communication blocking record,

The document US 6,789,203 B1 discloses a method, an apparatus; and a computer readable medium for preventing a DoS attack without notifiying the DoS attacker are disclosed. In one embodiment, in a client / server environment, a DoS defense module determines a connection request rate for a particular client. The client is blocked if the connection request rate is determined to be above a first pre-determined threshold. If, however, the connection request rate is below the first threshold but above a second threshold, then the client's connection request rate is slowed, or throttled, down to a rate consistent with a connection delay interval that's is based upon a throttling factor.

Document US 6,434,601 B1 discloses a method and apparatus which operates completely in the background (i.e., transparent to the user) to verify the validity of an addressee's Internet e-mail address. It is tried to prevent the delivery of an e-mail message having an incorrect user name, server name, or a misspelling in either or both in the addressee's Internet e-mail address. If an error is detected, it is called to the sender's attention, where it may be corrected before the message is sent.

WO 2006/088915 A1 discloses a system that allows senders to manage electronic messaging content at the point of origin. The system is integrated with the client application being used to prepare the message for sending. A send request is intercepted still inside the client and a series of message analysis steps is performed that analyze the sender, recipient, message, any attachments to the message and/or related content and information. The output of the message analysis is made available for users with rules as specified by the performance of a number of actions. The content analysis steps and the actions taken may be determined by the sender or may be centrally managed and determined by the sender's organization.

Document US 2005/0198175 A1 discloses methods and systems for creating and generating dynamic mailings with static and dynamic content. Filters for determining dynamic content are established.

An electronic mail management system is disclosed in document WO 2005/081109 A1.

### Summary of the invention

It is the object of the invention to provide improved techniques for detecting abuse of an electronic mail infrastructure in a computer network.

According to one aspect of the invention a computer implemented system according to claim 1 is provided.

According to a further aspect of the invention a method for detecting abuse of an electronic mail infrastructure in a computer network according to claim 13 is provided.

The present invention provides for a system and method to detect and prevent abuse of communication resources in the form of sending unsolicited bulk electronic mail through exploit-software vulnerabilities. A filtering is performed not within a gateway at an external layer, but directly on the host system which may execute a script, and not after the sending process is finished and the electronic mail on its way to the computer network, preferably the internet, but during the sending process.

The placement of the electronic mail monitoring component directly on the sending host system allows the considerations of additional valuable information for electronic mail classification. For example, information about a user, a script or program, and / or an initiating session is available for detection of potential abuse, but gets lost as soon the electronic mail leaves the host system. Alternatively, the electronic mail is also referred to as an electronic message or electronic communication.

In a preferred embodiment, the system and method include components to apply statistical filters to all outgoing electronic mails on a server. These preferably include electronic mails sent through an on-server electronic mail transfer agent as well as electronic mails transmitted directly over SMTP. SMTP is an acronym for Simple Mail Transfer Protocol. It is an Internet standard outlined by Internet Engineering Task Force (IETF) to be used for sending electronic mail messages. Currently, most internet providers use this protocol to send electronic mail.

In a preferred embodiment, the host system further comprises an electronic mail transfer agent component. Most executable scripts are generally not equipped with a mail transfer agent component, but instead relay electronic mails by invoking a mail transfer agent such as sendmail. The mail transfer agent should therefore be a component of the system.

In a further preferred embodiment, the electronic mail monitoring component is integrated with the electronic mail transfer agent component. Thus, the monitoring component enjoys the benefit of being able to access internal parameters of the mail transfer agent, and to influence the process of sending electronic messages.

In still a further preferred embodiment, the electronic mail monitoring component is provided as a filter in a data transmission connection between the application program component and the electronic mail transfer agent component. This embodiment is beneficial in particular when a closed-source mail transfer agent is integrated that cannot itself be modified.

In a preferred embodiment of the invention, the electronic mail monitoring component is provided in a data transmission connection between the application program component and the electronic mail transfer agent component. Again, such embodiment is beneficial in particular when a closed-source mail transfer agent is integrated that cannot itself be modified.

In a preferred embodiment, the electronic mail monitoring component is integrated with the network interface. Software such as executable scripts may be equipped with a mail transfer agent. Such integration assures that communication originating from such software can still be monitored.

At least one SMTP-connection is provided within the host system.

A further electronic mail monitoring component is provided in the at least one SMTP-connection, wherein the further electronic mail monitoring component is configured to intercept within the host system electronic mails generated by means of the application program component for sending to the computer network via the at least one SMTP-connection and the network interface. This is beneficial in case of using a SMTP engine.

In a further preferred embodiment, at least one of the electronic mail monitoring component and the further electronic mail monitoring component is provided as a transparent component.

In still another preferred embodiment, the host system further comprises a statistical classification component connected to at least one of the electronic mail monitoring component and the further electronic mail monitoring component.

In still a further preferred embodiment, the statistical classification component is integrated with at least one of the electronic mail monitoring component and the further electronic mail monitoring component.

In a further preferred embodiment, the statistical classification component is configured to assign to the intercepted electronic mail a statistical classification score based on at least one of an analysis of properties of the intercepted electronic mail and an analysis of relation information indicating relation of the intercepted electronic mail to at least one other electronic mail generated in the host system for sending to the computer network via the network interface, and wherein the statistical classification score is comprised within the electronic classification information. Thereby accuracy of classification may be improved.

In another preferred embodiment, the statistical classification component is configured to analyze at least one property of the intercepted electronic mail selected from the following group of properties of the intercepted electronic mail: sender identification, network address assigned to the sender identification, recipient information, network address assigned to the recipient information, subject line information, sending time information, and sending date information. The accuracy of the analysis may be further improved by using all properties mentioned above.

In still a further preferred embodiment, the statistical classification score assigned to the intercepted electronic mail is indicative of the intercepted electronic mail being at least one of an abusive electronic mail and an unsolicited electronic bulk mail.

Following, preferred embodiments of the method for detecting abuse of the electronic mail infrastructure in the computer network are disclosed.

In a further preferred embodiment of the invention, the electronic mail is intercepted in an electronic mail transfer agent component.

In a further preferred embodiment, the intercepted electronic mail is intercepted within the electronic mail transfer agent component prior to the transmission process being completed. This allows the system to interrupt the process of sending the electronic mail before the electronic mail has been passed from an invoking software application to an infrastructure that is responsible to deliver the message. Once the invoking software has successfully passed the electronic mail to the mail transfer agent, the email cannot be deleted without legal implications and without the unnoticed loss of the message.

In a further embodiment, the electronic mail is intercepted in a filter provided as the electronic mail monitoring component in a data transmission connection between the application program component and the electronic mail transfer agent component.

The electronic mail is intercepted in the network interface.

The electronic mail is intercepted in a SMTP-connection established within the host system.

In another embodiment, the electronic mail is intercepted prior to a completion of a SMTP session assigned to the intercepted electronic mail, thereby providing the option to still terminate the connection.

In another embodiment, the following steps are provided:
- the host system further comprises a statistical classification component connected to the electronic mail monitoring component,
- in the step of providing the electronic classification information, by the statistical classification component a statistical classification score is assigned to the intercepted electronic mail based on at least one of analyzing properties of the intercepted electronic mail and analyzing relation information indicating relation of the intercepted electronic mail to at least one other electronic mail generated in the host system for sending to the computer network via the network interface, and
- the statistical classification score is comprised within the electronic classification information.

In still a further preferred embodiment, the statistical classification component analyzes at least one property selected from the following group of properties of the intercepted electronic mail: sender identification, network address assigned to the sender identification, recipient information, network address assigned to the recipient information, subject line information, sending time information, and sending date information.

In a further embodiment, the statistical classification score assigned to the intercepted electronic mail is indicative of the intercepted electronic mail being at least one of an abusive electronic mail and an unsolicited electronic bulk mail.

In still another preferred embodiment, the step of analyzing the relation information comprises analyzing at least one of relation information indicating a time distribution of a plurality of electronic mails generated by the application program component and further relation information indicating similarity properties between the plurality of electronic mails.

In a further preferred embodiment of the invention, for a plurality of electronic mails provided on behalf of a user account or a group of user accounts a respective statistical classification component score is summed to provide a statistical classification component sum score which is used to determine whether at least one of an electronic mail sending behavior of the user account and an electronic mail sending behavior of the group of user accounts is abusive.

### Description of preferred embodiments of the invention

Following the invention will be described in further detail, by way of example, with reference to different embodiments. In the Figures:
- Fig. 1: shows pictorial representation of an electronic mail system,
- Fig. 2: shows alternative embodiments for integrating an electronic mail monitoring component into a host system provided in the electronic mail system of Fig. 1, and
- Fig. 3: depicts a flowchart of a process performed by an electronic mail monitoring component between start and end of transmission of an electronic mail.

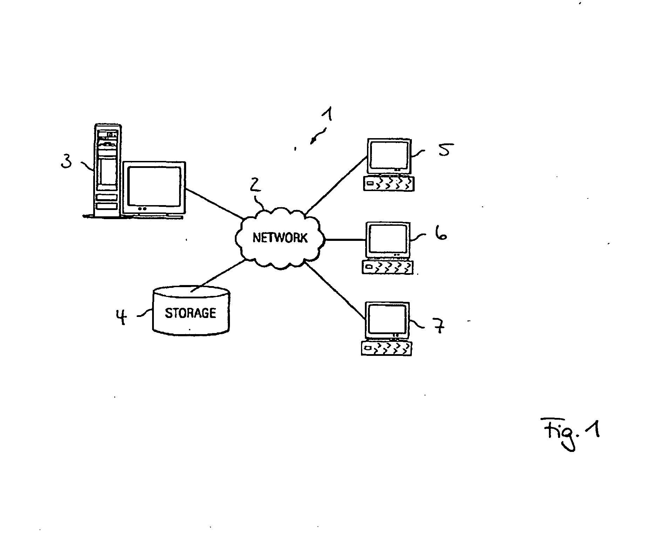

Referring to the figures, Fig. 1 shows pictorial representation of an electronic mail system. 1. The electronic mail system 1 is a network computers in which the present invention may be implemented. The provided electronic mail system 1 contains a network 2, which is the medium use to provide communication links between various devices and computers connected together within the electronic mail system 1. The network 2 may include connections, such as wire, wireless communication links, or fiber optic cables.

In the depicted example, a server 3 is connected to the network 2 along with a storage unit 4. In addition clients 5, 6, and 7 are connected to the network 2. These clients 5, 6, 7 which may also referred to as network stations may be, for example, personal computers or network computers, each having an ability of handling electronic mails as at least one of a sender configured to send electronic mails and a recipient configured to receive electronic mails.

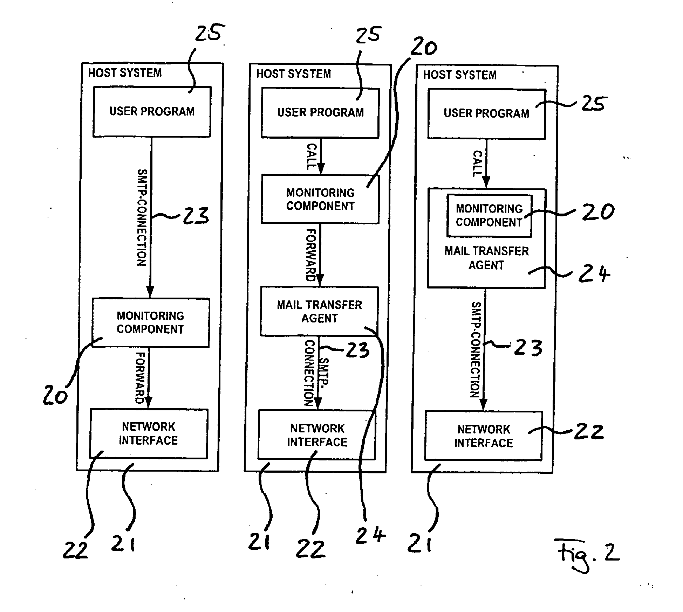

Fig. 2 shows alternative embodiments for integrating an electronic mail monitoring component 20 into a host system 21. The host system 21 is provided in the server 3 of the electronic mail system 1 of Fig. 1. Through the respective client 5, 6, 7 a user can access the host system 21 for electronic mail handling.

The monitoring component 20 is provided on top of a network interface 22 of the host system 21 in a way which is transparent to a user of the host system 21, so that no changes to a user software are needed. The monitoring component 20 monitors all outgoing SMTP-connections 23 on the host system 21.

A further monitoring component implemented similar to the monitoring component 20 can optionally be integrated into the host system's electronic mail transfer agent (MTA) 24, for example *sendmail*, or built on top of it, again transparent to, the user: The further monitoring component monitors all calls of a user program 25 or script to the MTA 24 which try to perform an electronic mail transmission. The reason for this two-fold monitoring is that, in some cases, user scripts or programs use the host-provided MTA 24 to send electronic mails, which is simple to implement. The monitoring component 20 within or on top of the MTA 24 has access to all parameters with which the MTA 24 is invoked. In other cases, user scripts or programs bypass the host system's MTA 24 by implementing their own SMTP engine. To be able to monitor electronic mails sent from these scripts as well, the further monitoring component at the network interface is needed, which has then access to the electronic mail's and connection's properties during the sending process.

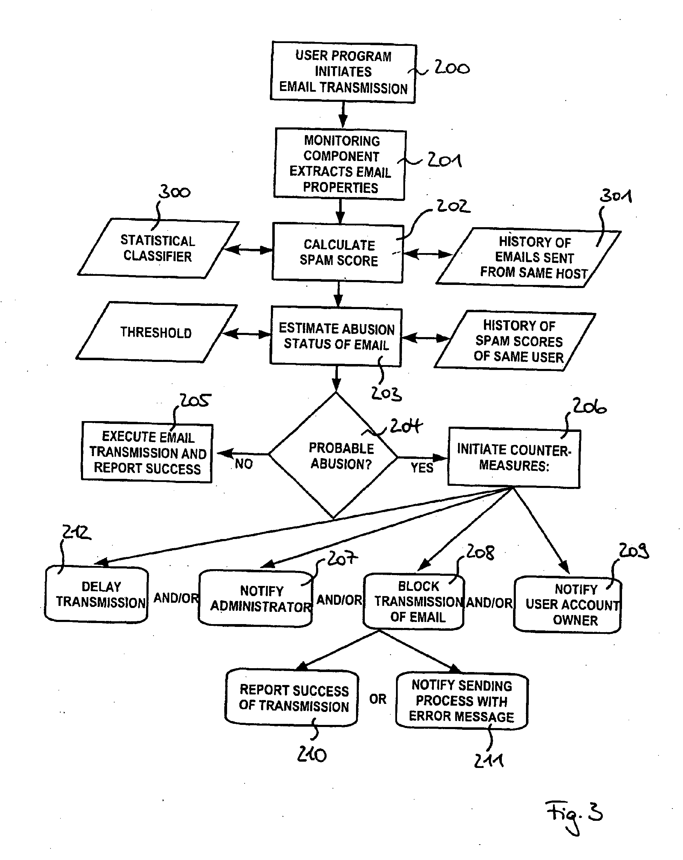

Following, referring to Fig. 3 a process which gets executed by the electronic mail monitoring component 20 between start and end of transmission of an electronic mail also referred to as electronic message.

A electronic mail monitoring component gets activated for each attempt of a program or script to send an electronic mail either over the host system's MTA or directly with its own SMTP-connection in a step 200. The electronic mail monitoring component analyzes the content of the intercepted electronic mail in a step 201, its recipient names addresses, its sender name and address, its subject line, its date and time of sending, the script or program which invoked the sending process and the parameters of the invocation, the properties of the user session which led to the invocation (for example the HTTP session which accessed the script), and all these properties of all electronic mails previously sent from the same user account and/or host.

With a statistical classifier 300 based on the contents of the intercepted electronic mail, its external attributes, the attributes of the sending invocation and their relation to their previous instances 301, a spam score of the current electronic mail is calculated in a step 202. The spam score is an indicator of the intercepted electronic mail being unsolicited bulk electronic mail. Together with the spam scores of all electronic mails recently sent by the same user or user group and the application of a pre-defined threshold, the monitoring component estimates whether the usage of the program or script is abusive.

In a preferred embodiment, the spam score may be inferred by calculating a sum of term-specific scores over a pre-defined list of terms, and adding a user-specific score. A term-specific score is inferred by multiplying the number of occurrences of the term in the electronic mail with a term-specific weight. The term-specific weight for each term may be determined by processing a collection of training electronic mails with a statistical learning method which is known as such. The user-specific score may be derived from the content or spam score of all messages which the user has sent within a recent time interval. In addition, the spam score may additionally be influenced by a score that is derived from the subject line of the message, from attached images, and from other elements of the message. The present invention does not dependent on the specific procedure for score calculation. Several methods as such are known in the art which may be implemented together with the system disclosed in the present application. For example, such methods can be found in the literature (Drucker et al.: "Support Vector Machines for Spam. Categorization", IEEE Transactions on Neural Networks, Volume: 10, Issue: 5, Pages 1048-1054, IEEE Computational Intelligence Society, 1999; Sahami et al.: "A Bayesian Approach to Filtering Junk E-mail", AAAI-98 Workshop on Learning for Text Categorization. Tech. Rep. WS-98-05, AAAI Press, 1998; Siefkeset al.: "Combining Winnow and orthogonal sparse bigrams for incremental, spam filtering", Proceedings of the 8th European Conference on Principles and Practice of Knowledge Discovery in Databases (PKDD 2004), volume 3202 of Lecture Notes in Artificial Intelligence, pages 410-421. Springer, 2004).

The electronic mail is classified as spam when the spam score exceeds a predefined threshold. In a possible embodiment, the threshold may be adjusted such that the risk of an erroneous classification of a message as spam is reduced below a desired value.

In the depicted embodiment, the monitoring component comprises a recognition component that recognizes the start of a transmission of an electronic mail or message, based on appropriate protocols such as SMTP. A further component of the monitoring component, namely a extracting component, extracts from the electronic mail the content and a set of features which are required to compute the spam score.

A subsequently invoked determination component determines in a step 202 a summand of the spam score that is based on the electronic mail itself. In the step 203, the monitoring component retrieves the history of electronic mails (messages) sent by the owner or operator of the software application and calculates a user-specific spam score. The monitoring component determines the final spam score (step 204), compares it against the threshold value and decides which action to take.

If the derived spam score exceeds a prescribed value, the monitoring component can trigger any of the following actions:
- Contact the administrator, provider or operator of the infrastructure in step 207 and notify them, possibly by means of electronic messages.
- Contact the owner or operator of the software (user), possibly by means of electronic messages.
- Interrupt the communication process, deliver an error code to the software that has invoked the monitoring component. Thus, the sender of the message is notified that the process of delivering the message has failed.
- Deliver a return code to the invoking software that indicates successful delivery of the message. Thus, the sender of the message is kept uninformed of the failure of delivery of the message.
- Block the user's access to the communication infrastructure.
- Store information about the electronic message and process.

When the spam score does not exceed the threshold, the intercepted electronic mail is processed normally. In case there is no potential abuse detected the sending of the electronic mail intercepted is performed in a step 205. A report about the successful sending is provided.

However, in case of a likely abuse of the electronic mail infrastructure (204), the electronic mail monitoring component initiates at least one of the following actions in a step 206:
- Send a notification to the host's administrator (step 207), including information about the user, the electronic mail, and the spam scores of the recently sent electronic mails.
- Send a notification to the user account's owner (step 209), including information about the electronic mail and the usage pattern of the affected script, and possibly advice about fixing the security holes.
- Abort transmission of the electronic mail (step 208), and block all further attempts of electronic mail transmission by the same script or program.
- Abort transmission of the intercepted electronic mail, and block all further attempts of electronic mail transmission by the same user or group of users.
- Abort transmission of the intercepted electronic mail (step 208), and adding an entry about the electronic mail and its spam score in the stored database of recent electronic mails.
- Report an error message to the sending script or the application program (step 211).
- Abort transmission of the intercepted electronic mail (step 208), but reporting success to the sending script or program (step 210), thus simulating a successful completion of the transmission to give no hint about the detection to the attacker.
- Delay transmission of the intercepted electronic mail (step 212), to reduce the amount of electronic mails that can be sent by the user, thus reducing the potential damage by abusive electronic mails.

The present invention provides a way to circumvent legal issues arising with the blocking of outgoing electronic mails. The filtering takes place before finishing the sending process, and therefore the electronic mail may be blocked before the initiating script or program gets feedback about the success of the transmission, and therefore the legal complications do not necessarily apply.

Additionally, the monitoring component may provide feedback directly to the sending script or program, even prior to finishing the transmission.

The features disclosed in this specification, claims and/or the figures may be material for the realization of the invention in its various embodiments, taken in isolation or in various combinations thereof.

## Claims

1. A computer implemented system for detecting abuse of an electronic mail infrastructure, comprising:
- a host system (21),
- an application program component (25) implemented on the host system (21),
- a network interface (22) provided as part of the host system (21) and configured to handle electronic data exchange between the host system (21) and a computer network,
- an electronic mail monitoring component (20) provided in the host system (21) and transparent to a user of the host system (21), wherein the electronic mail monitoring component (20) is configured to intercept within the host system (21) electronic mails generated by the application program component (25) for sending to the computer network via the network interface (22) and to provide electronic classification information about an abusive status of the intercepted electronic mail, and
- a client (5, 6, 7) connected to the computer network and configured to handle electronic mail as at least one of a sender configured to send electronic mail and a recipient configured to receive electronic mail,
wherein the host system (21) is provided in a server (3) of an electronic mail system (1), such that the host system (21) is accessible through the client (5, 6, 7) for electronic mail handling,
**characterized in that** at least one SMTP-connection (23) is provided within the host system (21) and a further electronic mail monitoring component (20) is provided in the at least one SMTP-connection (23), wherein the further electronic mail monitoring component is configured to intercept within the host system (21) electronic mails generated by means of the application program component (25) for sending to the computer network via the at least one SMTP-connection (23) and the network interface (22).

2. The system according to claim 1, wherein the host system (21) further comprises an electronic mail transfer agent component (24).

3. The system according to claim 2, wherein the electronic mail monitoring component (20) is integrated with the electronic mail transfer agent component (24).

4. The system according to claim 2, wherein the electronic mail monitoring component (20) is provided as a filter in a data transmission connection between the application program component (25) and the electronic mail transfer agent component (24).

5. The system according to claim 1 or 2, wherein the electronic mail monitoring component (20) is provided in a data transmission connection between the application program component (25) and the electronic mail transfer agent component (24).

6. The system according to claim 1 or 2, wherein the electronic mail monitoring component (20) is integrated with the network interface (22).

7. The system according to one of the preceding claims, wherein the further electronic mail monitoring component is provided as a transparent component.

8. The system according to one of the preceding claims, wherein the host system (21) further comprises a statistical classification component connected to at least one of the electronic mail monitoring component (20) and the further electronic mail monitoring component.

9. The system according to claim 8, wherein the statistical classification component is integrated with at least one of the electronic mail monitoring component (20) and the further electronic mail monitoring component.

10. The system according to claim 8 or 9, wherein the statistical classification component is configured to assign to the intercepted electronic mail a statistical classification score based on at least one of an analysis of properties of the intercepted electronic mail and an analysis of relation information indicating relation of the intercepted electronic mail to at least one other electronic mail generated in the host system (21) for sending to the computer network via the network interface (22), and wherein the statistical classification score is comprised within the electronic classification information.

11. The system according to one of the claims 8 to 10, wherein the statistical classification component is configured to analyze at least one property of the intercepted electronic mail selected from the following group of properties of the intercepted electronic mail:
sender identification, network address assigned to the sender identification, recipient information, network address assigned to the recipient information, subject line information, sending time information, and sending date information.

12. The system according to claim 10 or 11, wherein the statistical classification score assigned to the intercepted electronic mail is indicative of the intercepted electronic mail being at least one of an abusive electronic mail and an unsolicited electronic bulk mail.

13. A method for detecting abuse of an electronic mail infrastructure in a computer network, wherein a computer implemented system connectable to the computer network comprises
- a host system (21),
- an application program component (25) implemented on the host system (21),
- a network interface (22) provided as part of the host system (21) and configured to handle electronic data exchange between the host system (21) and the computer network, and
- a client (5, 6, 7) connected to the computer network and having an ability of handling electronic mail as at least one of a sender configured to send electronic mail and a recipient configured to receive electronic mail,
the method comprising the steps of:
- generating an electronic mail by the application program component (25) for sending the electronic mail to the computer network via the network interface (22),
- within the host system (21), intercepting the electronic mail by an electronic mail monitoring component (20) provided in the host system (21), said electronic mail monitoring component being transparent to a user of the host system (21), and
- by the electronic mail monitoring component (20), providing electronic classification information about an abusive status of the intercepted electronic mail,
wherein the host system (21) is provided in a server (3) of an electronic mail system (1), such that the host system (21) is accessible through the client (5, 6, 7) for electronic mail handling,
**characterized in that** at least one SMTP-connection (23) is provided within the host system (21) and a further electronic mail monitoring component (20) is provided in the at least one SMTP-connection (23), wherein the electronic mail is intercepted in a SMTP-connection (23) established within the host system (21) or in the network interface (22) by the further electronic mail monitoring component.

14. The method according to claim 13, wherein the electronic mail is intercepted in an electronic mail transfer agent component (24).

15. The method according to claim 14, wherein the intercepted electronic mail is intercepted prior to the beginning of a transmission process within the electronic mail transfer agent component (24).

16. The method according to claim 13, wherein the electronic mail is intercepted in a filter provided as the electronic mail monitoring component (20) in a data transmission connection between the application program component (25) and the electronic mail transfer agent component (24).

17. The method according to claim 13, wherein the electronic mail is intercepted prior to a completion of a SMTP session assigned to the intercepted electronic mail.

18. The method according to one of the claims 13 to 17, wherein:
- the host system (21) further comprises a statistical classification component connected to the electronic mail monitoring component (20),
- in the step of providing the electronic classification information, by the statistical classification component a statistical classification score is assigned to the intercepted electronic mail based on at least one of analyzing properties of the intercepted electronic mail and analyzing relation information indicating relation of the intercepted electronic mail to at least one other electronic mail generated in the host system (21) for sending to the computer network via the network interface (22), and
- the statistical classification score is comprised within the electronic classification information.

19. The method according to claim 18, wherein the statistical classification component analyzes at least one property selected from the following group of properties of the intercepted electronic mail: sender identification, network address assigned to the sender identification, recipient information, network address assigned to the recipient information, subject line information, sending time information, and sending date information.

20. The method according to claim 18 or 19, wherein the statistical classification score assigned to the intercepted electronic mail is indicative of the intercepted electronic mail being at least one of an abusive electronic mail and an unsolicited electronic bulk mail.

21. The method according to one of the claims 18 to 20, wherein the step of analyzing the relation information comprises analyzing at least one of relation information indicating a time distribution of a plurality of electronic mails generated by the application program component (25) and further relation information indicating similarity properties between the plurality of electronic mails.

22. The method according to claim 18, wherein for a plurality of electronic mails provided on behalf of a user account or a group of user accounts a respective statistical classification component score is summed to provide a statistical classification component sum score which is used to determine whether at least one of an electronic mail sending behavior of the user account and an electronic mail sending behavior of the group of user accounts is abusive.

## Patentansprüche

1. Computerimplementiertes System zum Bestimmen eines Missbrauchs einer Infrastruktur für elektronische Nachrichten, das System aufweisend:
- ein Host-System (21)
- eine Anwendungsprogramm-Komponente (25), die in dem Host-System (21) implementiert ist,
- eine Netzwerk-Schnittstelle (22), die als Teil des Host-Systems (21) bereitgestellt und geeignet ist, einen elektronischen Datenaustausch zwischen dem Host-System (21) und einem Computernetzwerk zu handhaben,
- eine Überwachungskomponente für elektronische Post (20), die in dem Host-System (21) bereitgestellt und für einen Nutzer des Host-Systems (21) transparent ist, wobei die Überwachungskomponente für die elektronische Post (20) geeignet ist, innerhalb des Host-Systems (21) elektronische Post, die mittels der Anwendungsprogramm-Komponente (25) zum Senden an das Computernetzwerk über die Netzwerkschnittstelle (22) erzeugt wird, abzufangen und elektronische Klassifikations-Informationen über einen Missbrauchsstatus der abgefangenen elektronischen Post bereitzustellen, und
- einen Client (5, 6, 7), der mit dem Computernetzwerk verbunden und geeignet ist, elektronische Post als ein Sender, der eingerichtet ist, elektronische Post zu senden, und/oder als ein Empfänger zu handhaben, welcher eingerichtet ist, elektronische Post zu empfangen,
wobei das Host-System (21) in einem Server (3) eines elektronischen Postsystems (1) bereitgestellt ist, so dass zum Handhaben von elektronischer Post über den Client (5, 6, 7) auf das Host-System (21) zugegriffen werden kann,
**dadurch gekennzeichnet, dass** in dem Host-System (21) wenigstens eine SMTP-Verbindung (23) und in der wenigstens einen SMTP-Verbindung (23) eine weitere Überwachungskomponente für elektronische Post (20) bereitgestellt sind, wobei die weitere Überwachungskomponente für elektronische Post eingerichtet ist, innerhalb des Host-Systems (21) elektronische Post abzufangen, die mittels der Anwendungsprogramm-Komponente (25) zum Senden an das Computernetzwerk über die wenigstens eine SMTP-Verbindung (23) und die Netzwerkschnittstelle (22) erzeugt wird.

2. System nach Anspruch 1, wobei das Host-System (21) eine Übertragungsagent-Komponente (24) für elektronische Post aufweist.

3. System nach Anspruch 2, wobei die Überwachungskomponente für elektronische Post (20) in die Übertragungsagent-Komponente für elektronische Post (24) integriert ist.

4. System nach Anspruch 2, wobei die Überwachungskomponente für elektronische Post (20) in einer Datenübertragungsverbindung zwischen der Anwendungsprogramm-Komponente (25) und der Übertragungsagent-Komponente für elektronische Post (24) als ein Filter bereitgestellt ist.

5. System nach Anspruch 1 oder 2, wobei die Überwachungskomponente für elektronische Post (20) in einer Datenübertragungsverbindung zwischen der Anwendungsprogramm-Komponente (25) und der Übertragungsangent-Komponente für elektronische Post (24) bereitgestellt ist.

6. System nach Anspruch 1 oder 2, wobei die Überwachungskomponente für elektronische Post (20) in die Netzwerkschnittstelle (22) integriert ist.

7. System nach einem der vorangehenden Ansprüche, wobei die weitere Überwachungskomponente für elektronische Post als eine transparente Komponente bereitgestellt ist.

8. System nach einem der vorangehenden Ansprüche, wobei das Host-System (21) eine Komponente zur statistischen Klassifizierung aufweist, die mit der Überwachungskomponente für elektronische Post (20) und/oder der weiteren Überwachungskomponente für elektronische Post verbunden ist.

9. System nach Anspruch 8, wobei die Komponente zur statistischen Klassifizierung integriert mit der Überwachungskomponente für elektronische Post (20) und/oder der weiteren Überwachungskomponente für elektronische Post gebildet ist.

10. System nach Anspruch 8 oder 9, wobei die Komponente zur statistischen Klassifizierung eingerichtet ist, der abgefangenen elektronischen Post basierend auf einer Analyse von Eigenschaften der abgefangenen elektronischen Post und/oder einer Analyse von Beziehungsinformation einen statistischen Klassifikationswert zuzuordnen, wobei die Beziehungsinformation eine Beziehung der abgefangenen elektronischen Post zu wenigstens einer anderen elektronischen Post anzeigt, die in dem Host-System (21) zum Senden an das Computernetzwerk über die Netzwerkschnittstelle (22) erzeugt wird, und wobei der statistische Klassifikationswert von der elektronischen Klassifikationsinformation umfasst ist.

11. System nach einem der Ansprüche 8 bis 10, wobei die Komponente zur statistischen Klassifikation eingerichtet ist, wenigstens eine Eigenschaft der abgefangenen elektronischen Post zu analysieren, wobei die Eigenschaft aus der folgenden Gruppe von Eigenschaften der abgefangenen elektronischen Post ausgewählt ist: Senderidentifikation; Netzwerkadresse, die der Senderidentifikation zugeordnet ist; Empfängerinformation; Netzwerkadresse, die der Empfängerinformation zugeordnet ist; Information zur Betreffzeile; Sendezeitinformation; und Sendedatumsinformationen.

12. System nach Anspruch 10 oder 11, wobei der statistische Klassifikationswert, welcher der abgefangenen elektronischen Post zugeordnet ist, anzeigt, dass die abgefangene elektronische Post eine elektronische Missbrauchs-Post und/oder eine unaufgeforderte elektronische Massenpost ist.

13. Verfahren zum Bestimmen eines Missbrauchs einer Infrastruktur für elektronische Post in einem Computernetzwerk, wobei ein computerimplementiertes System, welches mit dem Computernetzwerk verbindbar ist, die folgenden Merkmale aufweist:
- ein Host-System (21),
- eine Anwendungsprogramm-Komponente (25), die auf dem Host-System (21) implementiert ist,
- eine Netzwerkschnittstelle (22), die als Teil des Host-Systems (21) bereitgestellt und geeignet ist, einen elektronischen Datenaustausch zwischen dem Host-System (21) und dem Computernetzwerk zu handhaben, und
- einen Client (5, 6, 7), der mit dem Computernetzwerk verbunden und in der Lage ist, elektronische Post als ein Sender, der eingerichtet ist, elektronische Post zu senden, oder als ein Empfänger zu handhaben, der eingerichtet ist, elektronische Post zu empfangen,
wobei das Verfahren die folgenden Schritte aufweist:
- Erzeugen einer elektronischen Post mittels der Anwendungsprogramm-Komponente (25) zum Senden der elektronischen Post an das Computernetzwerk über die Netzwerkschnittstelle (22),
- Abfangen der elektronischen Post innerhalb des Host-Systems (21) mittels einer Überwachungskomponente für elektronische Post (20), die in dem Host-System (21) bereitgestellt ist, wobei die Überwachungskomponente für elektronische Post (20) für einen Nutzer des Host-Systems (21) transparent ist, und
- Bereitstellen von elektronischer Klassifikationsinformation über einen Missbrauchsstatus der abgefangenen elektronischen Post mittels der Überwachungskomponente für elektronische Post (20),
wobei das Host-System (21) in einem Server (3) eines elektronischen Postsystems (1) bereitgestellt ist, so dass zum Handhaben elektronischer Post über den Client (5, 6, 7) auf das Host-System (21) zugegriffen werden kann,
**dadurch gekennzeichnet ist, dass** in dem Host-System (21) wenigstens eine SMTP-Verbindung (23) und in der wenigstens eine SMTP-Verbindung (23) eine weitere Überwachungskomponente für elektronische Post (20) bereitgestellt sind, wobei die elektronische Post mittels der weiteren Überwachungskomponente für elektronische Post in einer SMTP-Verbindung (23) abgefangen wird, die in dem Host-System (21) oder in der Netzwerkschnittstelle (22) aufgebaut wird.

14. Verfahren nach Anspruch 13, wobei die elektronische Post in einer Übertragungsagent-Komponente für elektronische Post (24) abgefangen wird.

15. Verfahren nach Anspruch 14, wobei die abgefangene elektronische Post abgefangen wird bevor ein Übertragungsprozess in der Übertragungsagent-Komponente für elektronische Post (24) beginnt.

16. Verfahren nach Anspruch 13, wobei die elektronische Post in einem Filter abgefangen wird, der als die Überwachungskomponente für elektronische Post (20) in einer Datenübertragungsverbindung zwischen der Anwendungsprogramm-Komponente (25) und der Übertragungsagent-Komponente für elektronische Post (24) bereitgestellt ist.

17. Verfahren nach Anspruch 13, wobei die elektronische Post abgefangen wird vor dem Abschluss einer SMTP-Sitzung, die der abgefangenen elektronischen Post zugeordnet ist.

18. Verfahren nach einem der Ansprüche 13 bis 17, wobei die folgenden Merkmale vorgesehen sind:
- das Host-System (21) weist eine Komponente zur statistischen Klassifizierung auf, die mit der Überwachungskomponente für elektronische Post (20) verbunden ist,
- in dem Schritt zum Bereitstellen der elektronischen Klassifikationsinformation wird mittels der Komponente zur statistischen Klassifizierung der abgefangenen elektronischen Post ein statistischer Klassifikationswert zugeordnet, basierend auf einem Analysieren von Eigenschaften der abgefangenen elektronischen Post und/oder einem Analysieren von Beziehungsinformation, die eine Beziehung der abgefangenen elektronischen Post zu wenigstens einer anderen elektronischen Post anzeigt, welche in dem Host-System (21) zum Senden an das Computernetzwerk über die Netzwerkschnittstelle (22) erzeugt wird, und
- der statistische Klassifikationswert ist von der elektronischen Klassifikationsinformation umfasst.

19. Verfahren nach Anspruch 18, wobei die Komponente zur statistischen Klassifizierung wenigstens eine Eigenschaft analysiert, die aus der folgenden Gruppe von Eigenschaften der abgefangenen elektronischen Post ausgewählt wird: Senderidentifikation; Netzwerkadresse, die der Senderidentifikation zugeordnet ist; Empfängerinformation; Netzwerkadresse, die der Empfängerinformation zugeordnet ist; Information zur Betreffzeile; Sendezeitinformation; und Sendedatumsinformationen.

20. Verfahren nach Anspruch 18 oder 19, wobei der statistische Klassifikationswert, der der abgefangenen elektronischen Post zugeordnet wird, anzeigt, dass die abgefangene elektronische Post eine elektronische Missbrauchspost und/oder eine unaufgeforderte elektronische Massenpost ist.

21. Verfahren nach einem der Ansprüche 18 bis 20, wobei der Schritt zum Analysieren der Beziehungsinformation ein Analysieren einer Beziehungsinformation, welche eine Zeitverteilung von mehreren elektronischen Nachrichten anzeigt, die mittels der Anwendungsprogramm-Komponente (25) erzeugt wurden, und/oder von weiterer Beziehungsinformation umfasst, die Ähnlichkeitseigenschaften zwischen den mehreren elektronischen Nachrichten anzeigt.

22. Verfahren nach Anspruch 18, wobei für mehrere elektronische Nachrichten, die im Auftrag eines Nutzerkontos oder einer Gruppe von Nutzerkonten bereitgestellt ist, ein entsprechender statistischer Klassifikations-Komponentenwert summiert werden, um eine Summenwert für eine statistische Klassifikations-Komponente bereitzustellen, welche genutzt wird, um zu bestimmen, ob ein Sendeverhalten des Nutzerkontos für elektronische Post und/oder ein Sendeverhalten der Gruppe von Nutzerkonten für elektronische Post missbräuchlich ist.

## Revendications

1. Système mis en oeuvre par ordinateur pour détecter un abus d'une infrastructure de courrier électronique, comprenant :
- un système hôte (21),
- un composant de programme d'application (25) mis en oeuvre sur le système hôte (21),
- une interface de réseau (22) fournie dans le cadre du système hôte (21) et configurée pour gérer un échange de données électroniques entre le système hôte (21) et un réseau informatique,
- un composant de surveillance de courrier électronique (20) fourni dans le système hôte (21) et transparent pour un utilisateur du système hôte (21), dans lequel le composant de surveillance de courrier électronique (20) est configuré pour intercepter, à l'intérieur du système hôte (21), des courriers électroniques générés par le composant de programme d'application (25) à envoyer au réseau informatique par l'intermédiaire de l'interface de réseau (22) et pour fournir des informations de classification électronique au sujet d'un statut abusif du courrier électronique intercepté, et
- un client (5, 6, 7) relié au réseau informatique et configuré pour gérer un courrier électronique en tant qu'au moins l'un d'un expéditeur configuré pour envoyer un courrier électronique et un destinataire configuré pour recevoir un courrier électronique,
dans lequel le système hôte (21) est fourni dans un serveur (3) d'un système de courrier électronique (1), de sorte que le système hôte (21) soit accessible à travers le client (5, 6, 7) pour gérer un courrier électronique,
**caractérisé en ce qu'**il est fourni au moins une liaison SMTP (23) à l'intérieur du système hôte (21) et il est fourni un autre composant de surveillance de courrier électronique (20) dans l'au moins une liaison SMTP (23), dans lequel l'autre composant de surveillance de courrier électronique est configuré pour intercepter, à l'intérieur du système hôte (21), des courriers électroniques générés au moyen du composant de programme d'application (25) à envoyer au réseau informatique par l'intermédiaire de l'au moins une liaison SMTP (23) et de l'interface de réseau (22).

2. Système selon la revendication 1, dans lequel le système hôte (21) comprend en outre un composant d'agent de transfert de courrier électronique (24).

3. Système selon la revendication 2, dans lequel le composant de surveillance de courrier électronique (20) est intégré au composant d'agent de transfert de courrier électronique (24).

4. Système selon la revendication 2, dans lequel le composant de surveillance de courrier électronique (20) est fourni en tant que filtre dans une liaison de transmission de données entre le composant de programme d'application (25) et le composant d'agent de transfert de courrier électronique (24).

5. Système selon la revendication 1 ou 2, dans lequel le composant de surveillance de courrier électronique (20) est fourni dans une liaison de transmission de données entre le composant de programme d'application (25) et le composant d'agent de transfert de courrier électronique (24).

6. Système selon la revendication 1 ou 2, dans lequel le composant de surveillance de courrier électronique (20) est intégré à l'interface de réseau (22).

7. Système selon l'une des revendications précédentes, dans lequel l'autre composant de surveillance de courrier électronique est fourni en tant que composant transparent.

8. Système selon l'une des revendications précédentes, dans lequel le système hôte (21) comprend en outre un composant de classification statistique relié à l'au moins un du composant de surveillance de courrier électronique (20) et de l'autre composant de surveillance de courrier électronique.

9. Système selon la revendication 8, dans lequel le composant de classification statistique est intégré à au moins l'un du composant de surveillance de courrier électronique (20) et de l'autre composant de surveillance de courrier électronique.

10. Système selon la revendication 8 ou 9, dans lequel le composant de classification statistique est configuré pour attribuer, au courrier électronique intercepté, un score de classification statistique sur la base d'au moins l'une d'une analyse de propriétés du courrier électronique intercepté et d'une analyse d'informations de relation indiquant une relation du courrier électronique intercepté avec au moins un autre courrier électronique généré dans le système hôte (21) à envoyer au réseau informatique par l'intermédiaire de l'interface de réseau (22), et dans lequel le score de classification statistique est compris à l'intérieur des informations de classification électronique.

11. Système selon l'une des revendications 8 à 10, dans lequel le composant de classification statistique est configuré pour analyser au moins une propriété du courrier électronique intercepté sélectionné dans le groupe suivant de propriétés du courrier électronique intercepté : une identification d'expéditeur, une adresse de réseau attribuée à l'identification d'expéditeur, des informations de destinataire, une adresse de réseau attribuée aux informations de destinataire, des informations de ligne de sujet, des informations de temps d'envoi et des informations de date d'envoi.

12. Système selon la revendication 10 ou 11, dans lequel le score de classification statistique attribué au courrier électronique intercepté indique que le courrier électronique intercepté est au moins l'un d'un courrier électronique abusif et d'un courrier électronique en publipostage non sollicité.

13. Procédé de détection d'un abus d'une infrastructure de courrier électronique dans un réseau informatique, dans lequel un système mis en oeuvre par ordinateur pouvant être relié au réseau informatique comprend :
- un système hôte (21),
- un composant de programme d'application (25) mis en oeuvre sur le système hôte (21),
- une interface de réseau (22) fournie dans le cadre du système hôte (21) et configurée pour gérer un échange de données électroniques entre le système hôte (21) et le réseau informatique, et
- un client (5, 6, 7) relié au réseau informatique et ayant une capacité de gestion de courrier électronique en tant qu'au moins l'un d'un expéditeur configuré pour envoyer un courrier électronique et d'un destinataire configuré pour recevoir un courrier électronique,
le procédé comprenant les étapes de :
- la génération d'un courrier électronique par le composant de programme d'application (25) pour envoyer le courrier électronique au réseau informatique par l'intermédiaire de l'interface de réseau (22),
- à l'intérieur du système hôte (21), l'interception du courrier électronique par un composant de surveillance de courrier électronique (20) fourni dans le système hôte (21), ledit composant de surveillance de courrier électronique étant transparent pour un utilisateur du système hôte (21), et
- la fourniture, par le composant de surveillance de courrier électronique (20), d'informations de classification électronique au sujet d'un statut abusif du courrier électronique intercepté,
dans lequel le système hôte (21) est fourni dans un serveur (3) d'un système de courrier électronique (1), de sorte que le système hôte (21) soit accessible à travers le client (5, 6, 7) pour gérer un courrier électronique,
**caractérisé en ce qu'**il est fourni au moins une liaison SMTP (23) à l'intérieur du système hôte (21) et il est fourni un autre composant de surveillance de courrier électronique (20) dans l'au moins une liaison SMTP (23), dans lequel le courrier électronique est intercepté dans une liaison SMTP (23) établie à l'intérieur du système hôte (21) ou dans l'interface de réseau (22) par l'autre composant de surveillance de courrier électronique.

14. Procédé selon la revendication 13, dans lequel le courrier électronique est intercepté dans un composant d'agent de transfert de courrier électronique (24).

15. Procédé selon la revendication 14, dans lequel le courrier électronique intercepté est intercepté avant le début d'un processus de transmission à l'intérieur du composant d'agent de transfert de courrier électronique (24).

16. Procédé selon la revendication 13, dans lequel le courrier électronique est intercepté dans un filtre fourni en tant que composant de surveillance de courrier électronique (20) dans une liaison de transmission de données entre le composant de programme d'application (25) et le composant d'agent de transfert de courrier électronique (24).

17. Procédé selon la revendication 13, dans lequel le courrier électronique est intercepté avant une fin d'une session SMTP attribuée au courrier électronique intercepté.

18. Procédé selon l'une des revendications 13 à 17, dans lequel :
- le système hôte (21) comprend en outre un composant de classification statistique relié au composant de surveillance de courrier électronique (20),
- à l'étape de la fourniture des informations de classification électronique, un score de classification statistique est attribué, par le composant de classification statistique, au courrier électronique intercepté sur la base d'au moins l'une d'une analyse de propriétés du courrier électronique intercepté et d'une analyse d'informations de relation indiquant une relation du courrier électronique intercepté avec au moins un autre courrier électronique généré dans le système hôte (21) à envoyer au réseau informatique par l'intermédiaire de l'interface de réseau (22), et
- le score de classification statistique est compris à l'intérieur des informations de classification électronique.

19. Procédé selon la revendication 18, dans lequel le composant de classification statistique analyse au moins une propriété sélectionnée dans le groupe suivant de propriétés du courrier électronique intercepté : une identification d'expéditeur, une adresse de réseau attribuée à l'identification d'expéditeur, des informations de destinataire, une adresse de réseau attribuée aux informations de destinataire, des informations de ligne de sujet, des informations de temps d'envoi et des informations de date d'envoi.

20. Procédé selon la revendication 18 ou 19, dans lequel le score de classification statistique attribué au courrier électronique intercepté indique que le courrier électronique intercepté est au moins l'un d'un courrier électronique abusif et d'un courrier électronique en publipostage non sollicité.

21. Procédé selon l'une des revendications 18 à 20, dans lequel l'étape de l'analyse des informations de relation comprend l'analyse d'au moins l'une d'informations de relation indiquant une répartition dans le temps d'une pluralité de courriers électroniques générés par le composant de programme d'application (25) et d'autres informations de relation indiquant des propriétés de similarité entre la pluralité de courriers électroniques.

22. Procédé selon la revendication 18, dans lequel, pour une pluralité de courriers électroniques fournis pour le compte d'un compte d'utilisateur ou d'un groupe de comptes d'utilisateur, un score de composant de classification statistique respectif est sommé pour fournir un score de somme de composant de classification statistique qui est utilisé pour déterminer si au moins l'un d'un comportement d'envoi de courrier électronique du compte d'utilisateur et d'un comportement d'envoi de courrier électronique du groupe de comptes d'utilisateur est abusif.
